(19) Europäisches Patentamt
European Patent Office
Office européen des brevets

(11) EP 3 167 244 B1

(12) FASCICULE DE BREVET EUROPEEN

(45) Date de publication et mention
de la délivrance du brevet:
**31.10.2018 Bulletin 2018/44**

(21) Numéro de dépôt: **15742374.0**

(22) Date de dépôt: **06.07.2015**

(51) Int Cl.:
*G01C 19/72* (2006.01)     *G02B 6/30* (2006.01)
*G02B 6/126* (2006.01)     *G02B 6/27* (2006.01)

(86) Numéro de dépôt international:
**PCT/FR2015/051865**

(87) Numéro de publication internationale:
**WO 2016/005691 (14.01.2016 Gazette 2016/02)**

(54) **SYSTÈME INTERFÉROMÉTRIQUE À FIBRE OPTIQUE**

FASEROPTISCHES INTERFEROMETRISCHES SYSTEM

OPTICAL FIBRE INTEROMETRIC SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.07.2014 FR 1456551**

(43) Date de publication de la demande:
**17.05.2017 Bulletin 2017/20**

(73) Titulaire: **IXBLUE**
**78100 Saint-Germain-en-Laye (FR)**

(72) Inventeurs:
• **SIMONPIETRI, Pascal**
**F-95240 Cormeilles en Parisis (FR)**
• **CHOUVIN, Stéphane**
**F-92220 Bagneux (FR)**
• **MOLUCON, Cédric**
**F-78100 Saint Germain en Laye (FR)**

(74) Mandataire: **Jacobacci Coralis Harle**
**32, rue de l'Arcade**
**75008 Paris (FR)**

(56) Documents cités:
**EP-A2- 1 469 283     US-A- 5 131 749
US-A- 5 475 772**

• **ERIC C. KINTNER: "Polarization control in
optical-fiber gyroscopes", OPTICS LETTERS,
vol. 6, no. 3, 1 mars 1981 (1981-03-01), page 154,
XP055194583, ISSN: 0146-9592, DOI:
10.1364/OL.6.000154 cité dans la demande**

## Description

La présente invention se rapporte à un système interférométrique à fibre optique en anneau de Sagnac. Un tel système interférométrique trouve notamment des applications dans les gyroscopes à fibre optique (ou FOG pour fiber-optic gyroscope).

Les gyroscopes à fibre optique sont de plus en plus utilisés pour la mesure de rotation dans les systèmes de navigation inertielle ou de guidage du fait de leurs performances en sensibilité, linéarité, stabilité et de l'avantage de compacité dû à l'utilisation de fibres optiques. Un tel gyroscope est divulgué dans le document EP1469283.

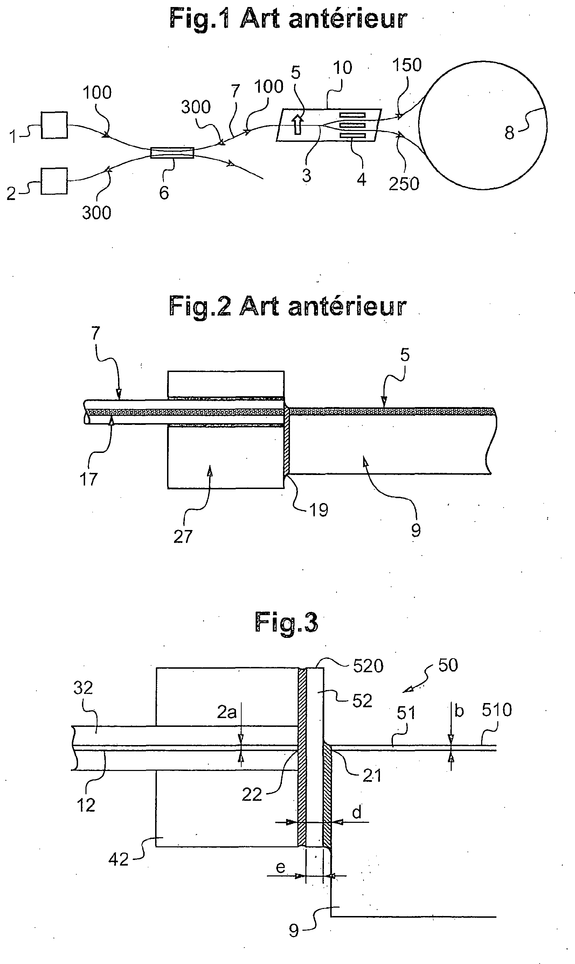

La figure 1 représente schématiquement un système interférométrique à fibre optique en anneau de Sagnac de l'art antérieur. Ce système interférométrique comporte une source de lumière 1, une bobine de fibre optique 8, un photodétecteur 2, et deux séparateurs optiques de faisceaux : un séparateur de bobine 3 et un séparateur source-récepteur 6, dit séparateur de récepteur. Le séparateur de bobine 3 sépare spatialement le faisceau source 100 en un premier faisceau divisé 150 et un deuxième faisceau divisé 250 qui se propagent dans des directions opposées dans la bobine de fibre optique 8. En sortie de la bobine, le séparateur de bobine 3 recombine ces deux faisceaux pour former un faisceau interférométrique 300. Le séparateur source-récepteur 6 guide le faisceau interférométrique 300 vers le photodétecteur 2.

Lorsque le système interférométrique est au repos, les deux faisceaux divisés émergent de la bobine de fibre optique en phase, du fait de la réciprocité des trajets optiques dans la bobine de fibre optique.

Toutefois, en présence de phénomènes physiques susceptibles de produire des effets non-réciproques sur le trajet optique des deux faisceaux contrapropagatifs dans la bobine de fibre optique, un déphasage apparaît dans le faisceau interférométrique détecté.

Parmi les principaux phénomènes physiques induisant des effets non-réciproques, la rotation du système interférométrique autour de l'axe de la bobine de fibre optique, induit un déphasage proportionnel à la vitesse de rotation $\Omega$. De cette propriété, appelée effet Sagnac, découle la principale application d'un interféromètre en anneau de Sagnac à un gyroscope pour mesurer une vitesse de rotation. D'autres phénomènes physiques, tels que l'effet magnéto-optique de Faraday, sont aussi susceptibles d'induire des déphasages non-réciproques, et peuvent donc être mesurés au moyen d'un interféromètre en anneau de Sagnac et sont utilisés par exemple dans des capteurs de courant.

Toutefois, certains phénomènes parasites produisent des effets non-réciproques susceptibles de perturber la précision, la sensibilité et la stabilité temporelle d'un interféromètre à fibre optique.

Ainsi, des effets de couplage entre différents modes spatiaux sont susceptibles de se produire dans une fibre optique multimode. L'utilisation d'une bobine de fibre optique monomode ou d'une section de fibre optique monomode avant le séparateur de bobine, permet de filtrer la propagation d'un faisceau monomode spatial.

Du fait d'une biréfringence, même très faible, dans la bobine de fibre, des effets de couplages entre polarisations peuvent se produire dans la bobine de fibre optique. Ces phénomènes de couplage en polarisation peuvent induire des déphasages parasites à l'origine d'erreurs de biais.

L'utilisation d'un polariseur 5 sur l'entrée-sortie commune de la bobine de fibre optique permet d'effectuer un filtrage en polarisation. Un polariseur 5 à fort taux de réjection en polarisation permet de réduire notablement les erreurs de biais d'un interféromètre à fibre optique en anneau de Sagnac (R. Ulrich, « Polarization and Depolarization in the Fiber-Optic Gyroscope », Fiber-Optic Rotation Sensors and Related Technologies, 52-77, 1982, Springer-Verlag).

Dans une configuration particulièrement avantageuse, illustrée sur la figure 1, l'interféromètre à fibre optique comporte un circuit optique intégré (COI) multifonction. Le COI 10 comprend des guides d'onde optiques formés de préférence par échange protonique sur un substrat de niobate de lithium. Le guide d'onde d'entrée forme un polariseur à guide d'onde 5 qui ne guide qu'une seule polarisation. Le COI 10 comprend aussi un séparateur de bobine 3 à jonction Y formé par division du guide d'onde 5 en deux branches. De façon avantageuse, le COI 10 comprend aussi un modulateur optique 4 adapté pour moduler le déphasage entre les deux faisceaux contrapropagatifs. Un tel COI multifonction 10 peut aisément être relié par des sections de fibre optique d'une part au séparateur source-récepteur 6 et d'autre part aux extrémités de la bobine de fibre optique 8.

Ainsi, la figure 2 représente schématiquement une vue en coupe d'un détail de l'extrémité d'une fibre optique 20 reliée à un polariseur à guide d'onde 5 formé sur un substrat 9 de circuit intégré optique tel qu'utilisé dans un dispositif interférométrique de l'art antérieur, par exemple illustré sur la figure 1. Dans cet exemple, le séparateur source-récepteur 6 est relié au circuit intégré optique 10 par une fibre optique 7. La fibre optique 7 a un coeur 17 de préférence monomode. L'extrémité de la fibre optique 7 est généralement collée à une férule 27, qui permet de connecter et d'aligner l'extrémité de la fibre optique sur le guide d'onde 5. Le coeur 17 de la fibre optique est aligné et centré par rapport au guide d'onde 5 formé par exemple par échange protonique sur un substrat 9 de niobate de lithium. La fibre optique 17 via la ferrule est rendue solidaire du circuit intégré optique au moyen d'une colle 19 transparente à la longueur d'onde utilisée.

Le montage de la figure 2 permet avantageusement de réaliser un filtre monomode spatial au moyen de la fibre 7 et un filtre en polarisation au moyen du polariseur à guide d'onde 5.

Un polariseur à guide d'onde 5 formé par échange protonique permet de séparer d'une part un état de polarisation, par exemple TE, guidé dans le guide d'onde 8 et d'autre part un état de polarisation, par exemple TM, non guidé qui se propage dans le substrat. Les polariseurs à guide d'onde intégré sur substrat de niobate de lithium présentent un taux de réjection en polarisation très élevé pour la polarisation non guidée et une perte d'insertion très limitée pour la polarisation guidée.

Toutefois, un polariseur à guide d'onde fonctionne par un effet de guidage sélectif en polarisation et non pas par absorption. De ce fait, une partie du faisceau non guidé qui se propage dans le substrat peut être recouplée dans la fibre optique en sortie du COI après une ou plusieurs réflexions internes dans le substrat.

En pratique, dans un polariseur 5 à échange protonique tel qu'illustré sur la figure 2, les réflexions internes de lumière non guidée dans le substrat limitent le taux de réjection en polarisation à environ -45 dB en puissance. Des circuits intégrés comportant une rainure sur la face arrière du substrat permettent d'atténuer les réflexions internes parasites et d'obtenir un taux de réjection en polarisation au mieux de -65 dB.

Il en résulte qu'une composante résiduelle de polarisation TM qui se propage via le substrat d'un polariseur à échange protonique 8 peut être transmise à la bobine de fibre optique. Or, une fibre dite monomode supporte en réalité deux modes de polarisation. Les couplages entre modes de polarisation sont la cause d'instabilité de biais. Il a été démontré que l'erreur en déphasage optique d'un interféromètre à fibre optique est limitée par le taux de réjection en amplitude $\varepsilon$ du polariseur situé en entrée/sortie de l'interféromètre en anneau et non par le taux de réjection en intensité $\varepsilon^2$ du polariseur (Kintner, E.C., « Polarization Control in Optical-Fiber Gyroscopes, » Optics Letters,Vol.,6,1981,pp154-156 (SPIE MS 8,pp.236-238)). L'obtention d'une erreur de mesure de phase maximale de $10^{-7}$ rad requiert un taux de réjection en polarisation de -140 dB et non pas de -70dB.

La qualité du polariseur influence donc les performances de certaines applications, notamment dans un gyroscope à fibre optique. Pour améliorer les performances en erreur de biais d'un interféromètre à fibre optique, il est donc souhaitable d'améliorer le taux de réjection en polarisation dans l'interféromètre à fibre optique. On estime qu'un taux de réjection en polarisation de -80 dB à -110 dB est nécessaire pour réduire significativement les erreurs de biais dans un interféromètre à fibre optique en anneau, soit un taux de réjection en polarisation $\varepsilon$ de $10^{-4}$ à $10^{-5,5}$ en amplitude. Cependant, il n'existe pas de polariseur ayant un taux d'extinction de -100 dB.

Cherchant à éviter la propagation du faisceau de polarisation TM dans le substrat d'un polariseur à guide d'onde, il a été proposé de placer un autre polariseur, (par exemple de type cube séparateur de polarisation, lame de cristal) sur la fibre d'entrée sortie-commune 7, et de relier cet autre polariseur au circuit optique intégré 10 via une fibre à maintien de polarisation. Cependant, le défaut d'alignement, d'une part, entre la fibre à maintien de polarisation et le polariseur supplémentaire, et d'autre part, entre la fibre à maintien de polarisation et le circuit optique intégré, crée un spectre cannelé formé par des interférences parasites sur le signal détecté. Ce spectre cannelé induit un défaut de longueur d'onde moyenne et est néfaste en particulier pour le facteur d'échelle d'un gyroscope à fibre optique.

Une autre solution consiste à utiliser une fibre polarisante sur la voie d'entrée-sortie commune 7. Toutefois, une fibre polarisante présente l'inconvénient d'être très sensible aux courbures : les pertes et le taux d'extinction de polarisation (PER pour polarization extinction ratio) sont modifiés en fonction du rayon de courbure et de l'axe d'une telle courbure. Généralement, on utilise plutôt une fibre polarisante de longueur limitée sur la voie d'entrée. Cependant, on peut aussi utiliser une fibre polarisante pour la bobine. Néanmoins, la longueur de fibre optique polarisante utilisable dans une bobine est en pratique limitée par l'atténuation linéique et le coût associés aux fibres polarisantes.

Or, la sensibilité d'un interféromètre à fibre optique en anneau de Sagnac est proportionnelle à la longueur de la fibre optique. Les fibres optiques non polarisantes représentent donc le choix préféré pour des bobines de fibre optique de grande longueur (plusieurs centaines de mètres à plusieurs dizaines de kilomètres) à un faible coût.

En pratique, le taux de réjection en polarisation d'un polariseur étant limité, un compromis doit généralement être trouvé entre filtrage en polarisation, conservation de polarisation dans la bobine de fibre optique et dépolarisation statistique.

Un des buts de l'invention est de proposer un système interférométrique à fibre optique en anneau de Sagnac peu sensible aux effets parasites non-réciproques de polarisation.

Un des buts de l'invention est de proposer un système interférométrique à fibre optique en anneau de Sagnac ayant de hautes performances en erreur de biais et en stabilité.

La présente invention a pour but de remédier aux inconvénients des dispositifs antérieurs et concerne plus particulièrement un système interférométrique à fibre optique comprenant une source de lumière adaptée pour émettre un faisceau source à une longueur d'onde $\lambda_0$ dans le vide, une bobine de fibre optique formant un trajet optique en anneau, un séparateur de bobine adapté pour séparer spatialement le faisceau source en un premier faisceau divisé et un deuxième faisceau divisé de manière à ce que le premier faisceau divisé et le deuxième faisceau divisé parcourent la bobine de fibre optique dans des directions opposées, le séparateur de bobine étant adapté pour recombiner lesdits premier faisceau divisé et deuxième faisceau divisé après propagation dans des directions opposées dans la bobine de fibre optique de manière à former un faisceau interférométrique, un séparateur de récepteur adapté pour guider le faisceau interférométrique vers un photodétecteur, des moyens de guidage optique adaptés pour diriger le faisceau source vers le premier moyen de séparation optique et des moyens de filtrage en polarisation.

Selon l'invention, les moyens de filtrage en polarisation comprennent un premier polariseur à guide d'onde, au moins un autre polariseur à lame mince ayant une épaisseur physique $e$ et un indice de réfraction n et au moins une section de guide d'onde optique, le premier polariseur et le au moins un autre polariseur étant juxtaposés en série sur le trajet optique entre le séparateur de récepteur et la bobine de fibre optique, le au moins un autre polariseur à lame mince étant intercalé entre d'une part une première extrémité de guide d'onde du premier polariseur et d'autre part une seconde extrémité de guide d'onde de ladite section de guide d'onde optique, la distance physique $d$ entre la première extrémité de guide d'onde du premier polariseur et la seconde extrémité de guide d'onde de ladite section de guide d'onde optique étant inférieure ou égale au double de la longueur de Rayleigh soit :

$$d \leq 2x\frac{\pi w_0^2}{\lambda_m}$$

où $\lambda_m = \frac{\lambda_0}{n}$ est la longueur d'onde du faisceau dans un milieu d'indice n et $w_0$ représente le rayon d'un faisceau monomode à 1/e en amplitude dans lesdits guides d'onde de ladite section de guide d'onde optique et du premier polariseur à guide d'onde et l'épaisseur physique $e$ du au moins un autre polariseur étant inférieure ou égale à la distance physique $d$.

Cette combinaison de deux polariseurs particuliers en série permet d'augmenter le taux de réjection en polarisation par comparaison avec un dispositif de l'art antérieur ne comportant qu'un seul polariseur, sans générer d'effets d'interférences parasites. De plus cette combinaison induit des pertes d'insertion extrêmement limitées et ne modifie pas l'encombrement du système interférométrique.

Le système interférométrique de l'invention présente une très faible erreur de biais induite par polarisation.

De façon avantageuse, le au moins un autre polariseur à lame mince a une épaisseur physique $e$ inférieure ou égale à $\frac{\pi w_0^2}{\lambda_m}$ et la distance physique $d$ est inférieure ou égale à $\frac{\pi w_0^2}{\lambda_m}$ .

De façon particulièrement avantageuse, le au moins un autre polariseur à lame mince a une épaisseur physique $e$ inférieure ou égale à $\frac{\pi w_0^2}{2 \times \lambda_m}$ et la distance physique $d$ est inférieure ou égale à $\frac{\pi w_0^2}{2 \times \lambda_m}$ .

Selon des aspects particuliers et avantageux de modes de réalisation de l'invention :

- le au moins un autre polariseur à lame mince a une épaisseur physique $e$ inférieure ou égale à 50 microns et de préférence inférieure ou égale à 30 microns ;
- le au moins un autre polariseur est formé d'une lame mince de verre polarisant ;
- le premier polariseur à guide d'onde est un polariseur à fibre optique ;
- le premier polariseur à guide d'onde est un polariseur à guide d'onde intégré sur un circuit optique intégré ;
- le premier polariseur à guide d'onde est formé par échange protonique sur un substrat de niobate de lithium.

Dans un mode de réalisation particulier et avantageux, le système interférométrique comprend un circuit intégré optique sur substrat de niobate de lithium, le circuit intégré optique comprenant le premier polariseur à guide d'onde, le séparateur de bobine et un modulateur optique de phase.

Avantageusement, le taux de réjection en polarisation du au moins un polariseur à lame mince est supérieur ou égal à -20 dB et le taux de réjection en polarisation du polariseur à guide d'onde est supérieur ou égal à -40 dB.

Dans un premier mode de réalisation, ladite au moins une section de guide d'onde optique, ledit au moins un autre polariseur et la première extrémité de guide d'onde du premier polariseur sont disposés sur le trajet optique du faisceau source entre le séparateur de bobine et le séparateur de récepteur.

Avantageusement, dans ce mode de réalisation, ladite au moins une section de guide d'onde optique comprend une section de fibre optique monomode reliée au séparateur de récepteur.

Dans un autre mode de réalisation, alternatif ou complémentaire au premier mode de réalisation, ladite au moins une section de guide d'onde optique, ledit au moins un autre polariseur et la première extrémité de guide d'onde du premier polariseur sont disposés sur le trajet optique du premier faisceau divisé et/ou du deuxième faisceau divisé, entre le séparateur de bobine et la bobine de fibre optique.

Avantageusement, dans ce mode de réalisation, ladite au moins une section de guide d'onde optique comprend une section de fibre optique monomode reliée à la bobine de fibre optique.

Selon des aspects particuliers et avantageux :

- le premier polariseur et le au moins un autre polariseur sont des polariseurs linéaires ayant des axes de polarisation alignés l'un par rapport à l'autre ;
- le défaut d'alignement axial entre la première extrémité de guide d'onde du premier polariseur et la seconde extrémité de guide d'onde de ladite section de guide d'onde optique est inférieur à $w_0$ /2 et de préférence inférieur à $w_0$ /10 ;
- ladite section de guide d'onde optique est une section de fibre polarisante.

Dans un mode de réalisation particulier, le séparateur de bobine est un séparateur optique à guide d'onde et le système interférométrique comporte en outre au moins un autre polariseur à lame mince ayant une épaisseur e inférieure ou égale à $2x\dfrac{\pi w_0^2}{\lambda_m}$ , ledit au moins un autre polariseur à lame mince étant disposé dans la zone de Rayleigh entre au moins une voie de sortie du séparateur de bobine et une extrémité de la bobine de fibre optique.

La présente invention concerne également les caractéristiques qui ressortiront au cours de la description qui va suivre et qui devront être considérées isolément ou selon toutes leurs combinaisons techniquement possibles.

L'invention trouvera une application particulièrement avantageuse dans un gyroscope à fibre optique, par exemple intégré dans un système de navigation inertielle ou de guidage.

Cette description donnée à titre d'exemple non limitatif fera mieux comprendre comment l'invention peut être réalisée en référence aux dessins annexés sur lesquels :

- la figure 1 représente schématiquement un système interférométrique à fibre optique en anneau selon l'art antérieur ;
- la figure 2 représente schématiquement une vue en coupe d'une extrémité de fibre optique reliée à un polariseur à guide d'onde selon l'art antérieur ;
- la figure 3 représente schématiquement une vue en coupe d'une extrémité de fibre optique reliée à des moyens de polarisation selon un mode de réalisation de l'invention ;
- la figure 4 illustre la divergence d'un faisceau gaussien en sortie d'une fibre optique monomode ;
- la figure 5 représente schématiquement un système interférométrique à fibre optique en anneau selon un premier mode de réalisation de l'invention ;
- la figure 6 représente schématiquement un système interférométrique à fibre optique en anneau selon un deuxième mode de réalisation de l'invention ;
- la figure 7 représente schématiquement un système interférométrique à fibre optique en anneau selon un troisième mode de réalisation de l'invention ;
- la figure 8 représente schématiquement un système interférométrique à fibre optique en anneau selon un quatrième mode de réalisation de l'invention ;
- la figure 9 représente schématiquement un système interférométrique à fibre optique en anneau selon un cinquième mode de réalisation de l'invention.

La figure 3 propose d'utiliser des moyens de polarisation 50 comprenant un montage d'au moins deux polariseurs en série dans une configuration particulière qui permet d'éviter les interférences parasites.

On choisit un premier polariseur 51 à guide d'onde.

Dans un mode de réalisation, le premier polariseur 51 est un polariseur à guide d'onde intégré sur un circuit optique intégré. De préférence, le premier polariseur 51 est formé par échange protonique sur substrat de niobate de lithium.

Dans une variante, le premier polariseur 51 est une fibre polarisante.

Un aspect de l'invention consiste à sélectionner un deuxième polariseur 52 fonctionnant en transmission et ayant une épaisseur ultramince. De préférence, le polariseur ultramince 52 a une épaisseur $e$ inférieure ou égale à 50 microns.

Un autre aspect de l'invention consiste à placer le deuxième polariseur ultramince 52 entre l'extrémité 21 du premier polariseur à guide d'onde 51 et l'extrémité 22 d'un autre guide d'onde.

Dans une variante, l'autre guide d'onde est un guide d'onde intégré sur un circuit optique intégré.

Dans une autre variante, détaillée en lien avec la figure 3, l'autre guide d'onde est constitué par le coeur 12 d'une fibre optique 32.

On note respectivement :

- *2a* le diamètre du coeur 12 de la fibre optique 32,
- *b* la dimension transverse du guide d'onde polarisant 51,
- *e* l'épaisseur du deuxième polariseur 52, et
- *d* la distance entre l'extrémité 21 du premier polariseur à guide d'onde 51 et l'extrémité 22 de l'autre guide d'onde 12.

Les dimensions 2a et b sont choisies de manière à ce que le couplage optique entre les deux guides d'onde soit possible dans les deux directions de propagation. Les diamètres de mode des différents guides doivent donc être compatibles, ce qui est réalisable avec une grande tolérance.

Plus précisément, on dispose l'extrémité 22 de la fibre optique 32 à une distance physique $d$ de l'extrémité 21 du premier polariseur à guide d'onde 51, la distance physique d étant inférieure ou égale au double de la longueur de la zone de Rayleigh définie par la relation suivante : $d \leq 2x\dfrac{\pi w_0^2}{\lambda_m}$ , où $w_0$ représente le rayon d'un faisceau monomode dans les moyens de guidage

optique et $\lambda_m$ représente la longueur d'onde du faisceau source 100 dans le matériau du polariseur $(\lambda_m = \frac{\lambda_0}{n})$, où n représente l'indice de réfraction du matériau du polariseur et $\lambda_0$ représente la longueur d'onde du faisceau source 100 dans le vide.

Le deuxième polariseur 52 est un polariseur à lame mince, ou polariseur ultramince, dont l'épaisseur satisfait la condition : $e \leq d \leq 2x\frac{\pi w_0^2}{\lambda_m}$ .

De façon avantageuse, le polariseur ultramince 52 est en matériau inorganique. Un polariseur inorganique offre une résistance accrue aux faisceaux source et confère au système interférométrique une durée de vie plus longue.

Un tel polariseur ultramince 52 est par exemple fabriqué par la société Corning sous la dénomination commerciale « Polarcor UltraThin Glass Polarizers ». Un tel polariseur ultramince 52 est constitué d'une lame de verre polarisante d'une épaisseur d'environ 30 microns ± 10 microns. Les dimensions d'un polariseur ultramince peuvent être définies en fonction des besoins de l'application, sauf l'épaisseur. Par exemple, on utilise un polariseur ultramince ayant une largeur de 1mm et une longueur de 2 mm. Un polariseur à lame ultramince 52 présente généralement un taux de réjection en polarisation de -20 dB pouvant aller jusque -23 dB selon la spécification du fabricant. La bande spectrale de transmission du polariseur à lame ultramince 52 est située dans le proche infrarouge (autour de 1310 nm et de 1550 nm).

Un polariseur à lame mince a l'avantage de présenter une bande passante de plusieurs dizaines de nanomètres (par exemple 1275-1345 nm ou 1510-1590 nm). La bande passante du polariseur à lame mince est donc plus étendue que la bande spectrale de la source. Le polariseur à lame mince ne réduit pas la bande passante du système interférométrique. On observe que la bande passante du polariseur à lame mince est plus étendue que celle d'une fibre optique polarisante. En effet, la bande passante d'une fibre polarisante est en général de 40 à 60nm. De plus, la bande passante d'une fibre optique peut être encore réduite du fait de courbures dans la fibre. D'autre part, ces fibres éliminent la polarisation rapide et pas la polarisation lente. Or, un circuit optique intégré en niobate de lithium à échange protonique laisse passer la polarisation rapide. Des signaux parasites de la fibre polarisante peuvent alors interférer avec le signal utile du circuit optique intégré.

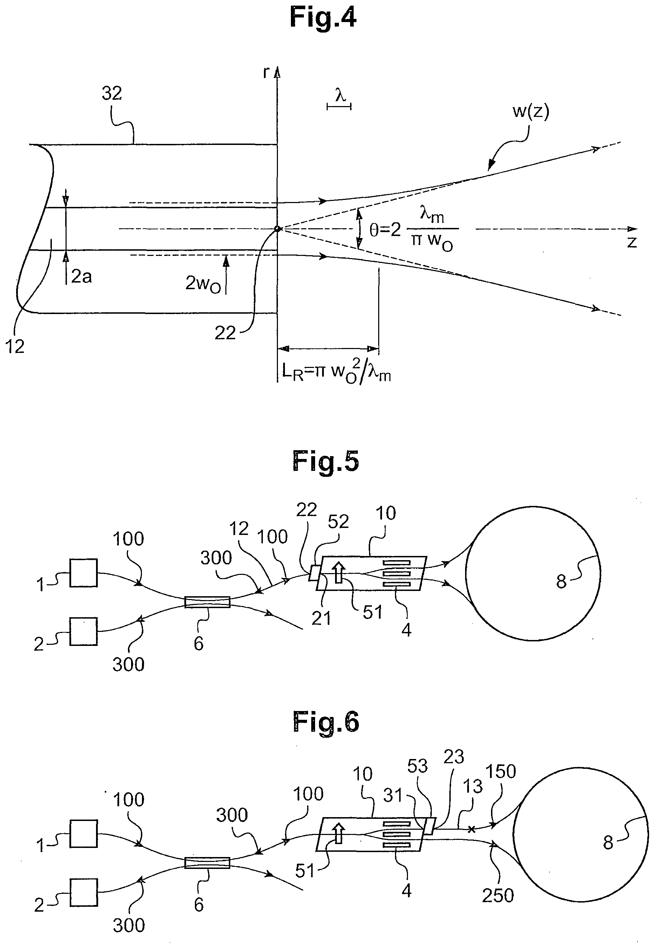

Dans un mode de réalisation préféré, illustré sur la figure 3, le premier polariseur ultramince 52 est collé directement à l'entrée d'un polariseur à guide d'onde 51, c'est-à-dire sur la tranche 19 du substrat 9. D'autre part, le polariseur à lame ultramince 52 est collé sur la férule 22 d'une fibre optique monomode 20. De façon avantageuse, la colle 23 utilisée pour coller le polariseur à lame ultramince 52 est transparente à la longueur d'onde de de la source. De préférence, la colle présente un indice de réfraction adapté à la fibre et/ou au circuit optique intégré. Avantageusement, la colle a une épaisseur négligeable (de moins de 1 microns à au plus quelques microns). A cet égard, la figure 5 n'est pas une représentation à l'échelle, l'épaisseur de colle étant très inférieure à l'épaisseur e du polariseur ultramince 52.

La fibre optique d'entrée a un diamètre de coeur égal à 2a. Le polariseur à guide d'onde 51 a une dimension transverse b. De préférence, les dimensions transverses de la fibre optique 20 et du polariseur à guide d'onde 51 sont identiques. Les axes longitudinaux de la fibre optique 20 et du polariseur à guide d'onde 51 sont alignés, de manière à éviter les pertes optiques. Dans un exemple de réalisation, le guide d'onde est fabriqué par échange protonique sur substrat de niobate de lithium, et le guide d'onde a, par construction, une section elliptique, avec un ratio entre les deux axes de l'ellipse pratiquement égal à deux.

L'axe de polarisation TE du polariseur à lame ultramince 52 est aligné sur l'axe de polarisation TE du guide d'onde polarisant 51 avant le collage.

De façon particulièrement avantageuse, le polariseur à lame ultramince 52 a une forme extérieure parallélépipédique, de 1mm de large sur 2 mm de long, avec une facette externe 520 parallèle à un axe de polarisation du polariseur ultramince 52. Or, le circuit intégré sur niobate de lithium présente une surface inférieure et une surface supérieure 510 planes et parallèles à l'axe du polariseur à guide d'onde 5. Pour aligner l'axe du polariseur à lame ultramince 52 sur l'axe de polarisation du polariseur à guide d'onde 51, il suffit alors d'aligner mécaniquement la facette 520 du polariseur ultramince 52 sur la face plane 510 du circuit optique intégré. Cet alignement mécanique permet de limiter à quelques dixièmes de degrés le défaut d'alignement entre les axes du polariseur ultramince 52 et du polariseur à guide d'onde 5. Un alignement plus fin en orientation peut ensuite être réalisé.

L'arrangement de la figure 3 permet de disposer en série un premier polariseur à guide d'onde 51, un deuxième polariseur ultramince 52 et l'extrémité de la fibre optique 20. De façon avantageuse, le deuxième polariseur ultramince 52 fonctionne par absorption si bien que la polarisation TM est fortement atténuée à l'entrée du deuxième polariseur à guide d'onde 5. Le deuxième polariseur ultramince 52 induit une perte optique par insertion d'environ -0.5 dB, si bien que l'état de polarisation transmis, par exemple TE, est peu affecté par les pertes d'insertion liées au deuxième polariseur 52.

Le taux d'extinction des deux polariseurs 51, 52 en série est amélioré d'environ -25dB à 35 dB, et le polariseur sur COI a un taux de réjection de -45 à -65 dB, ce qui permet d'atteindre un taux de réjection en polarisation total d'environ -70dB à -100dB.

On remarque que le montage de la figure 3 fonctionne dans les deux directions de propagation des faisceaux optiques guidés. Les moyens de polarisation 50 de la figure 3 sont donc parfaitement réciproques.

Avantageusement, le deuxième polariseur 52 s'étend sur la face du substrat 9 du circuit optique intégré qui est transverse au guide d'onde polarisant 51. De cette manière, le deuxième polariseur 52 permet d'atténuer la transmission de faisceaux parasites entre la fibre optique 32 et le substrat 9 du circuit optique intégré, et ceci dans les deux directions de propagation.

Les moyens de polarisation 50 formés d'au moins un premier polariseur à guide d'onde 51, d'un deuxième polariseur à lame mince 52 et d'un autre guide d'onde 12, s'insèrent facilement dans le système interférométrique à fibre optique, sur le trajet optique entre le séparateur de récepteur 6 et la bobine de fibre optique 8.

Grâce aux moyens de polarisation 50, le faisceau optique 100 provenant de la source est polarisé linéairement en série par exemple en transmission via le deuxième polariseur 52 puis le premier polariseur 51. Ces moyens de polarisation 50 permettent d'augmenter le taux de réjection en polarisation sans augmenter l'encombrement du système interférométrique à fibre optique.

Contrairement aux dispositifs antérieurs dans lesquels deux polariseurs sont disposés en série, avec une fibre biréfringente entre les deux polariseurs, on n'observe pas de spectre cannelé sur le signal interférométrique détecté.

A contrario, on observe que ce résultat ne s'applique pas à un polariseur plus courant à couches minces polarisantes sur substrat de verre, tel que par exemple un polariseur en verre Polarcor™ de la société Corning formé de deux couches minces polarisantes de 30 à 50 microns d'épaisseur déposées sur les deux faces opposées d'une lame de verre de 0.5 à 0.15 mm d'épaisseur. Un tel polariseur à couches minces présente pourtant un taux de réjection en polarisation très élevé d'au moins -40 dB ce qui le rend *a priori* plus intéressant dans l'application recherchée. En effet, on cherche à maximiser le taux de réjection en polarisation en entrée-sortie de l'interféromètre, pour viser idéalement un taux de réjection en polarisation de -90dB à -100dB. Un tel polariseur entraîne des pertes trop importantes d'environ 5dB en simple passage soit 10 dB en entrée/sortie commune.

Dans la cadre de la présente invention, le résultat obtenu avec un polariseur à lame ultramince 52 disposé en série avec le polariseur à guide d'onde 51 est analysé comme suit, en lien avec la figure 4.

Considérons un faisceau monomode Gaussien se propageant dans le coeur 12 de la fibre optique 32. Le diamètre du coeur 12 de la fibre optique est noté 2a. Le diamètre d'un faisceau monomode Gaussien se propageant dans le coeur de la fibre optique est noté : $2w_0$.

A l'extrémité de la fibre optique 32, la propagation du faisceau Gaussien en espace libre s'effectue le long de la direction longitudinale Z suivant deux régimes distincts. Dans une première partie, dite en champ proche, entre l'extrémité de la fibre optique et une distance appelée longueur de Rayleigh, le faisceau se propage avec une divergence quasiment nulle. La longueur de Rayleigh $L_R$ est définie comme suit :
Soit N tel que $2w_0 = N\lambda_m$

$$L_R = \frac{\pi w_0^2}{\lambda_m}$$

D'où l'approximation :

$$L_R \approx \frac{(2w_0)^2}{\lambda_m} = N^2 \lambda_m$$

Dans une seconde partie, dite en champ lointain, au-delà de la longueur de Rayleigh, le faisceau se propage avec une divergence ayant une ouverture angulaire égale à θ, définie comme suit :

$$\theta = 2\frac{\lambda}{\pi w_0}$$

D'où l'approximation :

$$\theta \approx \frac{\lambda}{2w_0} \approx \frac{1}{N} .$$

où N représente le nombre de longueur d'onde contenu dans $2w_0$ de la fibre optique 20.

Pour un diamètre 2a du coeur de la fibre égal à 6 microns, une longueur d'onde dans le vide égale à $\lambda_0 = 1,55 \ \mu m$, le diamètre du faisceau monomode est $2w_0$ égal à environ à 8 $\mu m$ et la longueur de Rayleigh est égale à environ 48 microns dans un milieu d'indice n=1,5. Dans une zone, dite zone de Rayleigh, s'étendant sur une longueur $L_R$ à partir de l'extrémité 22 de la fibre optique 32 et de diamètre $2w_0$, la divergence du faisceau est quasiment nulle, le diamètre du faisceau reste donc égal à 2 $w_0 \approx 8$ microns.

A une distance suivant l'axe Z de 50 microns, le faisceau diverge et présente un diamètre 2w(z=50 $\mu m$) d'environ 11,8 microns, et à une distance longitudinale Z de 150 microns, le diamètre du faisceau 2w(z=150$\mu m$) est d'environ 26 microns. A une distance de 65 $\mu m$, égale à deux fois la longueur de Rayleigh, le diamètre du faisceau 2w(z=65 $\mu m$) est d'environ 13,4 microns. En pratique, si les deux guides ont la même taille, la perte est de 3dB à une distance de deux fois la longueur de Rayleigh.

Dans un exemple de réalisation, la fibre optique présente un diamètre de mode $2w_0$ entre 6 et 8$\mu m$ environ. Le guide d'onde polarisant 51 présente un mode plutôt elliptique (et non pas circulaire) ayant un grand axe d'environ 8 microns de diamètre et un petit axe d'environ 4 microns de diamètre.

On choisit un polariseur à lame ultramince 52 d'épaisseur physique e inférieure à la longueur de Rayleigh disposé entre l'extrémité de la fibre optique et l'extrémité du polariseur à guide d'onde 51. Ainsi, le faisceau monomode Gaussien sortant de la fibre optique reste très peu divergent entre l'extrémité de la fibre optique 20 et l'entrée dans le polariseur à guide d'onde intégré 51.

Cette disposition permet de réduire considérablement les couplages parasites en dehors du guide d'onde polarisant et de réduire les faisceaux parasites se propageant dans le substrat du polariseur à guide d'onde intégré. De plus, les pertes induites sur le faisceau polarisé et guidé sont réduites, en pratique à moins de 1dB. Dans la direction inverse de propagation, le coeur 12 de la fibre ne collecte quasiment pas de faisceaux lumineux se propageant dans le substrat du polariseur à guide d'onde 51.

Cette combinaison permet d'additionner efficacement le taux de réjection en polarisation du premier polariseur 51 et du deuxième polariseur 52, sans générer de faisceau d'interférences parasites.

L'axe longitudinal en extrémité de la section de guide d'onde 12 est de préférence aligné sur l'axe longitudinal du polariseur à guide d'onde. Avantageusement, le défaut d'alignement axial entre la première extrémité 21 de guide d'onde du premier polariseur 51 et la seconde extrémité 22 de guide d'onde de ladite section de guide d'onde optique 12 est inférieur à $w_0/2$, et de préférence, inférieur à $w_0/10$.

L'alignement axial du polariseur à lame mince n'est pas critique, lorsqu'il est disposé côté source.

Le polariseur à lame ultramince 52 étant de préférence constitué de verre présente en outre l'avantage d'être plus résistant à un faisceau laser qu'un polariseur organique.

Au contraire, avec un polariseur à couches minces, dont l'épaisseur est comprise entre 0.15 mm et 0.5 mm c'est-à-dire entre 150 microns et 500 microns, le premier polariseur à guide d'onde 51 ne peut pas être disposé dans la zone de Rayleigh de la fibre optique. Dans ce cas, le faisceau polarisé par le polariseur à couches minces diverge : une partie de ce faisceau est transmise dans le polariseur à guide d'onde et une autre partie de ce faisceau, de puissance non négligeable, peut être transmise via le substrat du polariseur à guide d'onde, ce qui induit des pertes non négligeables, et éventuellement l'apparition d'un spectre cannelé. L'utilisation d'un polariseur à couches minces d'épaisseur supérieure à la longueur de Rayleigh produit ainsi des pertes trop importantes.

Un polariseur à lame mince, c'est-à-dire d'épaisseur inférieure à la longueur de Rayleigh, présente un taux de réjection en polarisation limité en pratique à environ -20 dB à -35 dB, c'est-à-dire inférieur de plusieurs ordres de grandeur au taux de réjection en polarisation, d'environ -40 dB, d'un polariseur à couches minces, ayant une épaisseur de 150 à 500 $\mu$m. Néanmoins, la juxtaposition d'un polariseur à lame mince et d'un polariseur à guide d'onde formé par échange protonique sur substrat de niobate de lithium permet d'atteindre un taux de réjection en polarisation mesuré de 80 à 110 dB avec très peu de pertes.

La tolérance en positionnement du polariseur à lame mince est donc bien plus faible dans la direction longitudinale suivant l'axe Z, que dans une direction transverse. En transverse, les dimensions du polariseur à lame mince sont bien plus grandes que la taille des modes.

Le système interférométrique de l'invention consiste paradoxalement à sélectionner un premier polariseur qui présente un taux de réjection en polarisation certes modéré, mais qui présente une épaisseur inférieure à la longueur de Rayleigh, pour permettre de disposer en série le premier polariseur et le deuxième polariseur dans cette zone de Rayleigh en sortie de la fibre optique 20.

Dans une variante, la fibre optique 20 peut être remplacée par un premier guide d'onde sur un circuit optique intégré, ayant des dimensions transverses analogues à celles du deuxième polariseur à guide d'onde. Dans ce cas, le premier polariseur ultramince est disposé entre le premier guide d'onde sur circuit optique intégré et le deuxième polariseur à guide d'onde, de manière à ce que le premier et le deuxième polariseur soient dans la zone de Rayleigh du premier guide d'onde sur un circuit optique intégré.

Dans un mode de réalisation particulier, la fibre optique 32 est une fibre polarisante ou à maintien de polarisation. Dans une autre variante, la fibre optique 32 est remplacée par un guide d'onde polarisant.

Les figures 5 à 9 illustrent différents modes de réalisation de l'invention.

La figure 5 propose un système interférométrique à fibre optique en anneau selon un mode de réalisation de l'invention. Les mêmes éléments que ceux qui apparaissent sur la figure 1 sont indiqués par les mêmes repères. Dans ce système interférométrique, on a disposé un premier polariseur à guide d'onde 51 et un deuxième polariseur à lame mince 52 en série sur l'entrée-sortie commune de la bobine de fibre optique, entre le séparateur de bobine 3 (ou séparateur de bobine) et le séparateur de récepteur 6. Le deuxième polariseur 52 est adjacent au premier polariseur 51.

Le premier polariseur 51 est un polariseur à guide d'onde sur circuit optique intégré, de préférence formé sur un substrat de niobate de lithium.

De façon avantageuse, le premier polariseur à guide d'onde 51 est intégré sur la branche commune d'un séparateur 3 à jonction Y et le polariseur à lame ultramince 52 est placé sur l'entrée-sortie commune du circuit intégré optique 10. Le deuxième polariseur 52 est collé à l'extrémité d'une fibre optique 12 qui relie l'entrée sortie de l'interféromètre au séparateur de source 6. Le deuxième polariseur 52 à lame mince est disposé entre l'extrémité 22 de la fibre optique 12 et l'extrémité 21 du premier polariseur à guide d'onde 51.

Dans le premier mode de réalisation, le polariseur à lame mince 52 est aligné sur le polariseur à guide d'onde 51. Dans ce cas, l'alignement des axes de polarisation est peu critique, car on estime qu'un défaut d'alignement de 5 degrés est susceptible d'induire une perte limitée de 1% sur le signal détecté.

Dans l'exemple de la figure 5, à l'entrée de l'interféromètre à fibre optique, le faisceau source 100 est polarisé successivement par le polariseur à lame mince 52 puis par le polariseur à guide d'onde 51. De manière analogue, en sortie de l'interféromètre à fibre optique, le faisceau interférométrique 300 est polarisé successivement par le polariseur à guide d'onde 51 puis par le polariseur à lame mince 52.

Dans le premier mode de réalisation, le polariseur à lame mince 52 est disposé sur l'entrée-sortie commune de l'interféromètre. L'avantage de ce mode de réalisation est que le faisceau source 100 et le faisceau interférométrique 300 passent chacun une fois à travers le même polariseur à lame mince 52. On utilise donc deux fois l'effet du polariseur 52.

Ainsi, le système interférométrique présente un taux de réjection en polarisation qui permet de réduire fortement l'erreur de biais induite par polarisation. On estime que l'erreur de biais est ainsi réduite d'un facteur égal au taux d'extinction du polariseur. Pour un polariseur ayant 20dB de taux de réjection, la réduction de l'erreur de biais est maximum lorsque les deux axes des polariseurs sont alignés. L'erreur de biais est proportionnelle à un facteur $100*cos^2$ de l'angle de désalignement entre l'axe de polarisation du COI et du polariseur à lame mince. Un autre avantage de cette configuration est d'effectuer le même filtre sur le mode antisymétrique du COI.

De manière alternative et/ou complémentaire, un autre polariseur à lame ultramince, peut être disposé en sortie du circuit optique intégré 10 sur le chemin optique du premier faisceau divisé 150 et/ou du deuxième faisceau divisé 250, dans la zone de Rayleigh en sortie du circuit optique intégré 10, l'épaisseur de cet autre polariseur ultramince étant aussi inférieure à la longueur de Rayleigh.

Dans un deuxième mode de réalisation, représenté sur la figure 6, le premier polariseur à guide d'onde 51 est intégré sur la branche commune d'un séparateur 3 à jonction Y s'étend jusqu'à l'extrémité 31 de sortie du circuit intégré optique et un polariseur à lame mince 53 est placé sur une des branches de sortie du circuit intégré optique 10. Le polariseur à lame mince 53 est collé à l'extrémité 23 d'une section de fibre optique 13 qui relie une extrémité de la bobine de fibre optique 8 à la sortie du circuit intégré optique sur laquelle est collé le polariseur à lame mince 53.

Dans l'exemple de la figure 6, le premier faisceau divisé 150 est polarisé successivement par le polariseur à guide d'onde 51 puis par le polariseur à lame mince 53 avant d'entrer dans la bobine de fibre optique 8. De manière analogue, en sortie de la bobine de fibre optique 8, le deuxième faisceau divisé 250 est polarisé successivement par le polariseur à lame mince 53 puis par le polariseur à guide d'onde 51. Dans ce cas, comparé au premier mode de réalisation, l'effet sur le biais est moindre, car les faisceaux ne passent qu'une fois dans le polariseur à lame mince 53. Cependant, dans le cas où il n'y a qu'un polariseur 53 sur une des deux voies, l'effet de réduction de l'erreur de biais est alors très limité, car on ne réduit que le biais dû à une seule des deux voies. Du fait que les faisceaux ne passent qu'une fois dans le polariseur à lame mince 53, cette configuration offre l'avantage de limiter les pertes.

Dans le second mode de réalisation, le polariseur à lame mince 53 est disposé du côté de la bobine de fibre optique 8. Dans ce cas, l'alignement du polariseur à lame mince 53 par rapport au polariseur à guide d'onde 51 est donc critique, du fait de l'effet en cosinus.

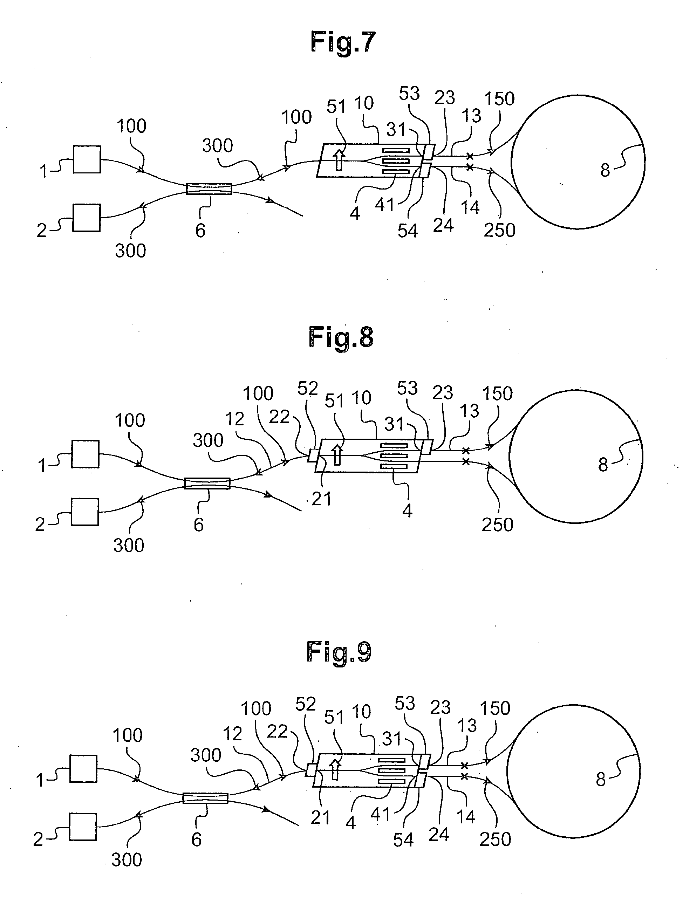

Dans un troisième mode de réalisation, représenté sur la figure 7, le système interférométrique comporte sur chaque voie de sortie du séparateur de bobine un autre polariseur à lame mince.

De façon avantageuse, sur l'exemple illustré en Figure 7, le premier polariseur à guide d'onde 51 est intégré sur la branche commune d'un séparateur 3 à jonction Y s'étend jusqu'aux extrémités 31, 41 de sortie du circuit intégré optique. Un polariseur à lame mince 53, respectivement 54 est placé sur chaque extrémité 31, respectivement 41 des deux branches de sortie du circuit intégré optique 10. Un polariseur à lame mince 53 est collé à l'extrémité 23 d'une section de fibre optique 13 qui relie une extrémité de la bobine de fibre optique 8 à l'extrémité 31 du guide d'onde polarisé. Un autre polariseur à lame mince 54 est collé à l'extrémité 24 d'une section de fibre optique 14 qui relie l'autre extrémité de la bobine de fibre optique 8 à l'autre extrémité 41 du guide d'onde polarisé. Avantageusement, un seul et même polariseur à lame mince peut s'étendre sur les deux extrémités 31, 41 du guide d'onde polarisé. Ce mode de réalisation permet de rajouter un polariseur de manière symétrique sur les deux voies de sorties.

Dans le cas où les voies de sortie du COI 10 sont séparées de moins d'une distance inférieure à la longueur d'un polariseur à lame mince, il est possible d'utiliser un seul et même polariseur à lame ultramince en sortie du COI pour couvrir les deux extrémités 31 et 41. Dans un exemple de réalisation, la longueur d'un polariseur à lame mince est de 2 mm, ce qui permet de couvrir des extrémités de guide d'onde distantes de moins de 2mm. A noter qu'il existe des polariseurs à lame mince de longueur bien supérieure à 2 mm.

Dans l'exemple de la figure 7, le premier faisceau divisé 150 est polarisé successivement par le polariseur à guide d'onde 51 puis par le polariseur à lame mince 53 avant d'entrer dans la bobine de fibre optique 8. En sortie de la bobine de fibre optique 8, le premier faisceau divisé 150 est polarisé successivement par le polariseur à lame mince 54 puis par le polariseur à guide d'onde 51. De manière analogue, le deuxième faisceau divisé 250 est polarisé successivement par le polariseur à guide d'onde 51 puis par le polariseur à lame mince 54 avant d'entrer dans la bobine de fibre optique 8. En sortie de la bobine de fibre optique 8, le deuxième faisceau divisé 250 est polarisé successivement par le polariseur à lame mince 53 puis par le polariseur à guide d'onde 51.

Dans le troisième mode de réalisation, un polariseur à lame mince 53, respectivement 54, est disposé à chaque extrémité de la bobine de fibre optique. Cette configuration permet aux faisceaux entrant dans la bobine et sortant de la bobine de traverser les deux polariseur à lame mince, ce qui permet de doubler l'effet de réjection du polariseur à lame mince, de manière analogue au premier mode de réalisation. L'effet sur l'erreur de biais est fonction de la racine carrée du cumul des taux de réjection des polariseurs, mais aussi fonction d'une part de l'angle de désalignement entre le polariseur à guide d'onde 51 et le polariseur à lame mince 53 et d'autre part de l'angle de désalignement entre le polariseur à guide d'onde 51 et le polariseur à lame mince 54. Cependant, dans le troisième mode de réalisation, le mode antisymétrique du circuit optique intégré n'est pas filtré par le polariseur à lame mince.

Les configurations des figures 5 à 7 peuvent être combinées entre elles.

Dans un quatrième mode de réalisation, représenté sur la figure 8, le premier polariseur à guide d'onde 51 s'étend de l'extrémité 21 jusqu'à l'extrémité 31 des branches du circuit intégré optique 10. Un polariseur à lame mince 52 est placé sur l'entrée-sortie commune du circuit intégré optique 10 et un autre polariseur à lame mince 53 est placé sur une des branches de sortie du circuit intégré optique 10. D'autre part, le polariseur à lame mince 52 est collé à l'extrémité d'une section de fibre optique 12 qui relie l'entrée sortie de l'interféromètre au séparateur de source 6. Ainsi, le polariseur à lame mince 52 est disposé entre l'extrémité 22 de la fibre optique 12 et l'extrémité 21 du premier polariseur à guide d'onde 51. La distance entre l'extrémité 21 et l'extrémité 22 est inférieure à la longueur de Rayleigh $L_R$. L'autre polariseur à lame mince 53 est collé d'une part à l'extrémité 31 du circuit intégré optique et d'autre part à l'extrémité 23 d'une section de fibre optique 13 qui est disposée directement face à une extrémité de la bobine de fibre optique 8.

Dans l'exemple de la figure 8, à l'entrée de l'interféromètre à fibre optique, le faisceau source 100 est polarisé successivement par le polariseur à lame mince 52 puis par le polariseur à guide d'onde 51. Ensuite, le premier faisceau divisé 150 est polarisé successivement par le polariseur à guide d'onde 51 puis par le polariseur à lame mince 53 avant d'entrer dans la bobine de fibre optique 8. En sortie de la bobine de fibre optique 8, le deuxième faisceau divisé 250 est polarisé successivement par le polariseur à lame mince 53 puis par le polariseur à guide d'onde 51. Enfin, en sortie de l'interféromètre à fibre optique, le faisceau interférométrique 300 est polarisé successivement par le polariseur à guide d'onde 51 puis par le polariseur à lame mince 52. Ce mode de réalisation permet de cumuler les avantages du premier et du deuxième mode de réalisation.

Dans un cinquième mode de réalisation, représenté sur la figure 9, le premier polariseur à guide d'onde 51 s'étend de l'extrémité 21 jusqu'aux extrémités 31 et 41 des branches du circuit intégré optique 10. Un polariseur à lame mince 52 est placé sur l'entrée-sortie commune du circuit intégré optique 10. Le polariseur à lame mince 52 est collé à l'extrémité d'une section de fibre optique 12 qui relie l'entrée sortie de l'interféromètre au séparateur de source 6. Ainsi, le polariseur à lame mince 52 est disposé entre l'extrémité 22 de la fibre optique 12 et l'extrémité 21 du premier polariseur à guide d'onde 51. La distance entre l'extrémité 21 et l'extrémité 22 est inférieure à la longueur de Rayleigh $L_R$.

D'autre part, un polariseur à lame mince 53, respectivement 54 est placé à chaque extrémité 31, respectivement 41 des deux branches de sortie du circuit intégré optique 10. Le polariseur à lame mince 53, respectivement 54 est collé d'une part à l'extrémité 31, respectivement 41, du circuit intégré optique et d'autre part à l'extrémité 23, respectivement 24 d'une section de fibre optique 13, respectivement 14 qui sont disposées respectivement face à chacune des extrémités de la bobine de fibre optique 8.

Dans l'exemple de la figure 9, à l'entrée de l'interféromètre à fibre optique, le faisceau source 100 est polarisé successivement par le polariseur à lame mince 52 puis par le polariseur à guide d'onde 51. Ensuite, le premier faisceau divisé 150 est polarisé successivement par le polariseur à guide d'onde 51 puis par le polariseur à lame mince 53 avant d'entrer dans la bobine de fibre optique 8. En sortie de la bobine de fibre optique 8, le premier faisceau divisé 150 est polarisé successivement par le polariseur à lame mince 54 puis par le polariseur à guide d'onde 51. De manière analogue, le deuxième faisceau divisé 250 est polarisé successivement par le polariseur à guide d'onde 51 puis par le polariseur à lame mince 54 avant d'entrer dans la bobine de fibre optique 8. En sortie de la bobine de fibre optique 8, le deuxième faisceau divisé 250 est polarisé successivement par le polariseur à lame mince 53 puis par le polariseur à guide d'onde 51. Enfin, en sortie de l'interféromètre à fibre optique, le faisceau interférométrique 300 est polarisé successivement par le polariseur à guide d'onde 51 puis par le polariseur à lame mince 52. Ce mode de réalisation permet de cumuler les avantages du premier et du troisième mode de réalisation.

Dans un mode de réalisation préféré, la bobine de fibre optique est formée d'une fibre optique monomode standard. Dans un autre mode de réalisation, la bobine de fibre optique est formée d'une fibre optique à maintien de polarisation, dont les axes sont alignés sur les axes du polariseur à guide d'onde 51 et/ou respectivement du au moins un polariseur à lame mince 53, 54.

## Revendications

1. Système interférométrique à fibre optique comprenant :

   - une source de lumière (1) adaptée pour émettre un faisceau source (100) à une longueur d'onde $\lambda_0$ dans le vide;
   - une bobine de fibre optique (8) formant un trajet optique en anneau ;
   - un séparateur de bobine (3) adapté pour séparer spatialement le faisceau source (100) en un premier faisceau divisé (150) et un deuxième faisceau divisé (250) de manière à ce que le premier faisceau divisé (150) et le deuxième faisceau divisé (250) parcourent la bobine de fibre optique (8) dans des directions opposées, le séparateur de bobine (3) étant adapté pour recombiner lesdits premier faisceau divisé (150) et deuxième faisceau divisé (250) après propagation dans des directions opposées dans la bobine de fibre optique (8) de manière à former un faisceau interférométrique (300) ;
   - un séparateur de récepteur (6) adapté pour guider le faisceau interférométrique vers un photodétecteur (2),
   - des moyens de filtrage en polarisation (5) comprenant:

     - un premier polariseur (51) à guide d'onde,
     - au moins une section de guide d'onde optique (12,13,14),

   **caractérisé en ce que** les moyens de filtrage en polarisation (5) comprennent :

     - au moins un autre polariseur (52, 53, 54) à lame mince ayant une épaisseur physique $e$ et un indice de réfraction n, et
     - le premier polariseur (51) et le au moins un autre polariseur (52, 53, 54) étant juxtaposés en série sur le trajet optique entre le séparateur de récepteur (6) et la bobine de fibre optique (8),
     - le au moins un autre polariseur (52, 53, 54) à lame mince étant intercalé entre d'une part une première extrémité (21, 31, 41) de guide d'onde du premier polariseur (51) et d'autre part une seconde extrémité (22, 23, 24) de guide d'onde de ladite section de guide d'onde optique (12, 13, 14), la distance physique $d$ entre la première extrémité de guide d'onde (21, 31, 41) du premier polariseur (51) et la seconde extrémité (22, 23, 24) de guide d'onde de ladite section de guide d'onde optique (12, 13, 14) étant inférieure ou égale au double de la longueur de Rayleigh

     soit $= \dfrac{\lambda_0}{n}$ repré , où $\lambda_m = \dfrac{\lambda_0}{n}$ représente la longueur d'onde du faisceau dans le milieu d'indice n, $w_0$ représente le rayon d'un faisceau monomode à 1/e en amplitude dans lesdits guides d'onde de ladite section de guide d'onde optique (12, 13, 14) et du premier polariseur (51) à guide d'onde et
     - l'épaisseur physique $e$ du au moins un autre polariseur (52, 53, 54) étant inférieure ou égale à la distance physique $d$.

2. Système interférométrique à fibre optique selon la revendication 1 dans lequel le au moins un autre polariseur (52, 53, 54) à lame mince a une épaisseur physique $e$ inférieure ou égale à $\dfrac{\pi w_0^2}{\lambda_m}$ et dans lequel la distance physique $d$ est inférieure ou égale à $\dfrac{\pi w_0^2}{\lambda_m}$ .

3. Système interférométrique à fibre optique selon la revendication 1ou la revendication 2 dans lequel le au moins un autre polariseur (52, 53, 54) à lame mince a une épaisseur physique e inférieure ou égale à $\dfrac{\pi w_0^2}{2 \times \lambda_m}$ et dans lequel la distance physique $d$ est inférieure ou égale à $\dfrac{\pi w_0^2}{2 \times \lambda_m}$ .

4. Système interférométrique à fibre optique selon l'une des revendications 1 à 3, dans lequel le au moins un autre polariseur (52, 53, 54) à lame mince a une épaisseur physique e inférieure ou égale à 50 microns et de préférence inférieure ou égale à 30 microns.

5. Système interférométrique à fibre optique selon l'une des revendications 1 à 4 dans lequel le au moins un autre polariseur (52, 53, 54) est formé d'une lame mince de verre polarisant.

6. Système interférométrique à fibre optique selon l'une des revendications 1 à 5 dans lequel le premier polariseur (51) à guide d'onde est un polariseur à fibre optique.

7. Système interférométrique à fibre optique selon l'une des revendications 1 à 5 dans lequel le premier polariseur (51) à guide d'onde est formé par échange protonique sur un substrat (9) de niobate de lithium.

8. Système interférométrique à fibre optique selon la revendication 7 comprenant un circuit intégré optique (10) sur substrat de niobate de lithium, le circuit intégré optique (10) comprenant le premier polariseur (51) à guide d'onde, le séparateur de bobine (3) et un modulateur optique de phase (4).

9.  Système interférométrique à fibre optique selon une des revendications 1 à 8 dans lequel ladite au moins une section de guide d'onde optique (12), ledit au moins un autre polariseur (52) et la première extrémité de guide d'onde (21) du premier polariseur (51) sont disposés sur le trajet optique du faisceau source (100) entre le séparateur de bobine (3) et le séparateur de récepteur (6).

10. Système interférométrique à fibre optique selon une des revendications 1 à 9 dans lequel ladite au moins une section de guide d'onde optique (12) comprend une section de fibre optique monomode reliée au séparateur de récepteur (6).

11. Système interférométrique à fibre optique selon une des revendications 1 à 10 dans lequel ladite au moins une section de guide d'onde optique (13, 14), ledit au moins un autre polariseur (53, 54) et la première extrémité de guide d'onde (31, 41) du premier polariseur (51) sont disposés sur le trajet optique du premier faisceau divisé (150) et/ou du deuxième faisceau divisé (250), entre le séparateur de bobine (3) et la bobine de fibre optique (8).

12. Système interférométrique à fibre optique selon l'une des revendications 1 à 11 dans lequel ladite au moins une section de guide d'onde optique (13, 14) comprend une section de fibre optique monomode reliée à la bobine de fibre optique (8).

13. Système interférométrique à fibre optique selon l'une des revendications 1 à 12 dans lequel le premier polariseur (51) et le au moins un autre polariseur (52, 53, 54) sont des polariseurs linéaires ayant des axes de polarisation alignés l'un par rapport à l'autre.

14. Système interférométrique à fibre optique selon l'une des revendications 1 à 13 dans lequel ladite section de guide d'onde optique (12, 13, 14) est une section de fibre polarisante.

**Patentansprüche**

1.  Faseroptisches interferometrisches System mit

    - einer Lichtquelle (1), die dazu ausgelegt ist, einen Quellenstrahl (100) mit einer Wellenlänge $\lambda_0$ im Vakuum auszustrahlen,
    - einer Spule (8) aus optischer Faser, die einen ringförmigen optischen Weg bildet,
    - einem Spulentrenner (3), der dazu ausgelegt ist, den Quellenstrahl (100) räumlich in einen ersten geteilten Strahl (150) und einen zweiten geteilten Strahl (250) derart zu teilen, daß der erste geteilte Strahl (150) und der zweite geteilte Strahl (250) die Spule (8) aus optischer Faser in entgegengesetzten Richtungen durchlaufen, wobei der Spulentrenner (3) dazu ausgelegt ist, den ersten geteilten Strahl (150) und den zweiten geteilten Strahl (250) nach der Ausbreitung in der Spule (8) aus optischer Faser in entgegengesetzten Richtungen so zu rekombinieren, daß ein interferometrischer Strahl (300) gebildet wird,
- einem Empfängertrenner (6), der dazu ausgelegt ist, den interferometrischen Strahl zu einem Photodetektor (2) zu leiten,
- polarisierenden Filtermitteln (5), die

    - einen ersten Polarisator (51) mit Wellenleiter,
    - wenigstens einen optischen Wellenleiterabschnitt (12, 13, 14) aufweisen,

**dadurch gekennzeichnet, daß** die polarisierenden Filtermittel (5)

- wenigstens einen weiteren Dünnschichtpolarisator (52, 53, 54) mit einer physischen Dicke e und einem Brechungsindex n aufweisen und
- der erste Polarisator (51) und der wenigstens eine weitere Polarisator (52, 53, 54) auf dem optischen Weg nebeneinander in Reihe zwischen dem Empfängertrenner (6) und der Spule (8) aus optischer Faser angeordnet sind,
- der wenigstens eine weitere Dünnschichtpolarisator (52, 53, 54) zwischen einem ersten Wellenleiterende (21, 31, 41) des ersten Polarisators (51) einerseits und einem zweiten Wellenleiterende (22, 23, 24) des optischen Wellenleiterabschnitts (12, 13, 14) andererseits eingefügt ist, wobei der physische Abstand d zwischen dem ersten Wellenleiterende (21, 31, 41) des ersten Polarisators (51) und dem zweiten Wellenleiterende (22, 23, 24) des optischen Wellenleiterabschnitts (12, 13, 14) kleiner als oder gleich dem Doppelten der Rayleigh-Wellenlänge, also

$$d \leq \frac{2\,\pi\,w_0^{\,2}}{\lambda_m}$$

ist, wobei $\lambda_m = \lambda_0/n$ die Wellenlänge des Strahls im Medium mit Brechungsindex n bedeutet, $w_0$ den Radius eines Monomodestrahls mit einer Amplitude 1/e in den Wellenleitern des optischen Wellenleiterabschnitts (12, 13, 14) und des ersten Polarisators (51) mit Wellenleiter bedeutet und

- die physische Dicke e des wenigstens einen weiteren Polarisators (52, 53, 54) kleiner als oder gleich dem physischen Abstand d ist.

2. Faseroptisches interferometrisches System gemäß Anspruch 1, bei dem der wenigstens eine weitere Dünnschichtpolarisator (52, 53, 54) eine physische Dicke e von kleiner als oder gleich

$$\frac{\pi w_0^2}{\lambda_m}$$

aufweist und bei dem der physische Abstand d kleiner als oder gleich

$$\frac{\pi w_0^2}{\lambda_m}$$

ist.

3. Faseroptisches interferometrisches System gemäß Anspruch 1 oder Anspruch 2, bei dem der wenigstens eine weitere Dünnschichtpolarisator (52, 53, 54) eine physische Dicke e von kleiner als oder gleich

$$\frac{\pi w_0^2}{2 \lambda_m}$$

aufweist und bei dem der physische Abstand d kleiner als oder gleich

$$\frac{\pi w_0^2}{2 \lambda_m}$$

ist.

4. Faseroptisches interferometrisches System gemäß Anspruch 1, bei dem der wenigstens eine weitere Dünnschichtpolarisator (52, 53, 54) eine physische Dicke e von kleiner als oder gleich 50 $\mu$m und vorzugsweise von kleiner als oder gleich 30 $\mu$m aufweist.

5. Faseroptisches interferometrisches System gemäß einem der Ansprüche 1 bis 4, bei dem der wenigstens eine weitere Polarisator (52, 53, 54) aus einer dünnen Schicht polarisierenden Glases gebildet ist.

6. Faseroptisches interferometrisches System gemäß einem der Ansprüche 1 bis 5, bei dem der erste Polarisator (51) mit Wellenleiter ein Polarisator mit optischer Faser ist.

7. Faseroptisches interferometrisches System gemäß einem der Ansprüche 1 bis 5, bei dem der erste Polarisator (51) mit Wellenleiter durch Protonenaustausch auf einem Substrat (9) aus Lithiumniobat gebildet ist.

8. Faseroptisches interferometrisches System gemäß Anspruch 7 mit einem optischen integrierten Schaltkreis (10) auf Lithiumniobatsubstrat, wobei der optische integrierte Schaltkreis (10) den ersten Polarisator (51) mit Wellenleiter, den Spulentrenner (3) und einen optischen Phasenmodulator (4) aufweist.

9. Faseroptisches interferometrisches System gemäß einem der Ansprüche 1 bis 8, bei dem der wenigstens eine optische Wellenleiterabschnitt (12), der wenigstens eine weitere Polarisator (52) und das erste Wellenleiterende (21) des ersten Polarisators (51) auf dem optischen Weg des Quellenstrahls (100) zwischen dem Spulentrenner (3) und dem Empfängertrenner (6) angeordnet sind.

10. Faseroptisches interferometrisches System gemäß einem der Ansprüche 1 bis 9, bei dem der wenigstens eine optische Wellenleiterabschnitt (12) einen mit dem Empfängertrenner (6) verbundenen Abschnitt mit optischer Monomodefaser aufweist.

11. Faseroptisches interferometrisches System gemäß einem der Ansprüche 1 bis 10, bei dem der wenigstens eine optische Wellenleiterabschnitt (13, 14), der wenigstens eine weitere Polarisator (53, 54) und das erste Wellenleiterende (31, 41) des ersten Polarisators (51) auf dem optischen Weg des ersten geteilten Strahls (150) und/oder des zweiten geteilten Strahls (250) zwischen dem Spulentrenner (3) und der Spule (8) aus optischer Faser angeordnet sind.

12. Faseroptisches interferometrisches System gemäß einem der Ansprüche 1 bis 11, bei dem der wenigstens eine optische Wellenleiterabschnitt (13, 14) einen Abschnitt einer mit der Spule (8) aus optischer Faser verbundenen optischen Monomodefaserabschnitt aufweist.

13. Faseroptisches interferometrisches System gemäß einem der Ansprüche 1, bei dem der erste Polarisator (51) und der wenigstens eine weitere Polarisator (52, 53, 54) lineare Polarisatoren mit aufeinander ausgerichteten Polarisationsachsen sind.

14. Faseroptisches interferometrisches System gemäß einem der Ansprüche 1 bis 13, bei dem der optische Wellenleiterabschnitt (12, 13, 14) ein Abschnitt mit polarisierender Faser ist.

**Claims**

1. A fiber-optic interferometric system comprising:

    - a light source (1) adapted to emit a source beam (100) at a wavelength $\lambda_0$ in vacuum;
    - a fiber optic coil (8) forming a ring optical path;
    - a coil splitter (3) adapted to spatially separate the source beam (100) into a first split beam (150) and a second split beam (250), so that the first split beam (150) and the second split beam (250) travel through the fiber optic coil (8) in opposite directions, the coil splitter (3) being adapted to recombine said first split beam (150) and second split beam (250) after propagation in opposite directions in the fiber optic coil (8), so as to form an interferometric beam (300);
    - a receiver splitter (6) adapted to guide the interferometric beam towards a photodetector (2);
    - polarization filtering means (5) comprising :

        - a first waveguide polarizer (51),
        - at least one section of optical waveguide (12, 13, 14),

    **characterized in that** the polarization filtering means (5) comprise:

        - at least one other thin-plate polarizer (52, 53, 54) having a physical thickness e and a refractive index $n$, and
        - the first polarizer (51) and the at least one polarizer (52, 53, 54) being juxtaposed in series in the optical path between the receiver splitter (6) and the fiber optic coil (8),
        - the at least one other thin-plate polarizer (52, 53, 54) being interposed between, on the one hand, a first waveguide end (21, 31, 41) of the first polarizer (51) and, on the other hand, a second waveguide end (22, 23, 24) of said optical waveguide section 12, 13, 14), the physical distance d between the first waveguide end (21, 31, 41) of the first polarizer (51) and the second waveguide end (22, 23, 24) of said optical waveguide section (12, 13, 14) being lower than or equal to twice the Rayleigh length, i.e.:

        $$d \leq \frac{2\pi w_0^2}{\lambda_m},\ \text{where}\ \lambda_m = \frac{\lambda_0}{n}\ \text{represents the}$$

wavelength of the beam in a medium of index $n$, $w_0$ represents the radius of a single-mode beam at 1/e in amplitude in said waveguides of said optical waveguide section (12, 13, 14) and of the first waveguide polarizer (51), and
    - the physical thickness e of the at least one other polarizer (52, 53, 54) being lower than or equal to the physical distance $d$.

2. The fiber-optic interferometric system according to claim 1, wherein the at least one other thin-plate polarizer (52, 53, 54) has a physical thickness e lower than or equal to $\dfrac{\pi w_0^2}{\lambda_m}$ and wherein the physical distance $d$ is lower than or equal to $\dfrac{\pi w_0^2}{\lambda_m}$.

3. The fiber-optic interferometric system according to claim 1 or claim 2, wherein the at least one other thin-plate polarizer (52, 53, 54) has a physical thickness $e$ lower than or equal to $\dfrac{\pi w_0^2}{2 \times \lambda_m}$ and wherein the physical distance $d$ is lower than or equal to $\dfrac{\pi w_0^2}{2 \times \lambda_m}$.

4. The fiber-optic interferometric system according to one of claims 1 to 3, wherein the at least one other thin-plate polarizer (52, 53, 54) has a physical thickness e lower than or equal to 50 microns and preferably lower than or equal to 30 microns.

5. The fiber-optic interferometric system according to one of claims 1 to 4, wherein the at least one other polarizer (52, 53, 54) is formed of a thin plate of polarizing glass.

6. The fiber-optic interferometric system according to one of claims 1 to 5, wherein the first waveguide polarizer (51) is a fiber-optic polarizer.

7. The fiber-optic interferometric system according to one of claims 1 to 5, wherein the first waveguide polarizer (51) is formed by proton exchange on a lithium niobate substrate (9).

8. The fiber-optic interferometric system according to claim 7, comprising an integrated optical circuit (10) on a lithium niobate substrate, the integrated optical circuit (10) comprising the first waveguide polarizer (51), the coil splitter (3) and an optical phase modulator (4).

9. The fiber-optic interferometric system according to one of claims 1 to 8, wherein said at least one section of optical waveguide (12), said at least one other polarizer (52) and the first waveguide end (21) of the first polarizer (51) are arranged on the optical path of the source beam (100) between the coil splitter (3) and the receiver splitter (6).

10. The fiber-optic interferometric system according to one of claims 1 to 9, wherein said at least one section of optical waveguide (12) comprises a section of single-mode optical fiber connected to the receiving splitter (6).

11. The fiber-optic interferometric system according to one of claims 1 to 10, wherein said at least one section of optical waveguide (13, 14), said at least one other polarizer (53, 54) and the first waveguide end (31, 41) of the first polarizer (51) are arranged on the optical path of the first split beam (150) and/or of the second split beam (250), between the coil splitter (3) and the fiber optic coil (8).

12. The fiber-optic interferometric system according to one of claims 1 to 11, wherein said at least one section of optical waveguide (13, 14) comprises a section of single-mode optical fiber connected to the fiber optic coil (8).

13. The fiber-optic interferometric system according to one of claims 1 to 12, wherein the first polarizer (51) and the at least one other polarizer (52, 53, 54) are linear polarizers having polarization axes aligned relative to each other.

14. The fiber-optic interferometric system according to one of claims 1 to 13, wherein said section of optical waveguide (12, 13, 14) is a section of polarizing fiber.

# Fig.1 Art antérieur

# Fig.2 Art antérieur

# Fig.3

# Fig.4

# Fig.5

# Fig.6

Fig.7

Fig.8

Fig.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1469283 A

**Littérature non-brevet citée dans la description**

- Polarization and Depolarization in the Fiber-Optic Gyroscope. **R. ULRICH.** Fiber-Optic Rotation Sensors and Related Technologies. Springer-Verlag, 1982, 52-77

- **KINTNER, E.C.** Polarization Control in Optical-Fiber Gyroscopes. *Optics Letters,* 1981, vol. 6, 154-156
- OPTICS LETTERS. SPIE MS, vol. 8, 236-238